Europäisches Patentamt

European Patent Office

Office européen des brevets

(19)

(11) Publication number: **0 426 983 A2**

# EUROPEAN PATENT APPLICATION

(12)

(21) Application number: 90118073.7

(22) Date of filing: 20.09.90

(51) Int. Cl.⁵: **G06F 13/12**

(30) Priority: 09.11.89 US 434138

(43) Date of publication of application:
15.05.91 Bulletin 91/20

(84) Designated Contracting States:
DE FR GB

(71) Applicant: International Business Machines
Corporation
Old Orchard Road
Armonk, N.Y. 10504(US)

(72) Inventor: Casavant, Peter Christian
Gerts Knob Road
Underhill, Vermont 05489(US)
Inventor: Ives, Daniel John
R.R. 3 Box 436A
Jericho, Vermont 05465(US)
Inventor: Liguori, Daniel Joseph
144 Main Street, Apt. 11
Essex Junction, Vermont 05452(US)
Inventor: Merrill, Mark Crerie
R.R. 3 Box 436A
Jericho, Vermont 05465(US)
Inventor: Nelson, Stephen Edward
Unit B2, 7 Saxonhollow Drive
Essex Junction, Vermont 05452(US)

(74) Representative: Jost, Ottokarl, Dipl.-Ing.
IBM Deutschland GmbH Patentwesen und
Urheberrecht Schönaicher Strasse 220
W-7030 Böblingen(DE)

(54) **Processor - I/O address expansion.**

(57) A data processing system that accesses different sets of processor - I/O storage registers as a function of access mode control signals from a processor. A decoder associated with the registers receives signals from the CPU indicating that data stored in single byte of multiple byte registers is to be transferred. When these signals indicate that X-byte wide data is to be transferred, one of a set of X-byte wide registers are addressed. When these signals indicate that Y-byte wide data is to be transferred, access is diverted to the Y-byte wide registers. The decoder also decodes these signals to determine which of the Y-byte wide registers is to be addressed in that particular cycle. This system is particularly suitable for processor - I/O applications wherein the serviced adaptor card has limited register access to communicate with the processor.

FIG.1

# PROCESSOR - I/O ADDRESS EXPANSION

The invention relates generally to data processing apparatus, and more specifically to a technique to logically expand the register allocation for processor - I/O communication.

In current microprocessor-based computing systems such as personal computers and workstations, the processor must communicate with a host of peripheral (or I/O) equipment. Such equipment includes display devices such as printers and terminals; input devices such as a keyboard or a hookup to a computer network; and supplemental on-board processing apparatus such as coprocessor boards and the like. In order to carry out this communication, all of these devices are interconnected by a communications bus under the control of the central processor. The central processor sends out instructions over the Bus to the various apparatus attached to it in order to control the overall flow of instructions and data therebetween.

The processor communicates with the I/O equipment through an interface containing a plurality of processor-I/O storage registers. The interface is coupled to both the processor (via the communications bus) and one of the peripheral devices. The processor transfers data to or from a selected one of the registers. The processor produces a set of register selection (or address) signals that are decoded to address the appropriate register. If the processor (and the width of the bus) is two bytes (16 bits) or more, the above operation can be carried out in one of two or more "access modes." In a first access mode wherein data is to be transferred 8 bits at a time, one byte of the selected processor - I/O register is addressed. In a second access mode wherein data is to be transferred 16 bits at a time, two bytes of the selected processor - I/O register is addressed. This doubling can continue until the full width of the bus is used.

In the prior art, only dedicated storage registers are used for processor - I/O data transfer. That is, for the purpose of processor-I/O data access, there is no way to access registers other than the dedicated processor - I/O registers of a given byte width in order to expand the data transfer capability.

For example, in a two byte Micro Channel Architecture (MCA) machine, signals SBHE and A0 indicate the processor - I/O access mode. The dedicated processor - I/O registers are two bytes wide, as is the bus. If both SBHE and A0 are low, a two byte data access mode is indicated, and both bytes of the selected register are addressed; if one of these signals are low when the other is high, a single byte data access mode is indicated, and only one byte of the same two-byte register is addressed. Thus, for either a single or a double byte access, the same physical register is addressed.

As both the number and complexity of peripheral devices increases, it would be advantageous to address a greater number of processor - I/O registers. That is, it would be advantageous to address different registers for one, two, etc. byte data transfers. However, because the total number of different registers that can be addressed is determined by the number of register selection signals that can be output by the processor at any one time, further increases in the number of processor - I/O registers cannot be accommodated without increasing the number of register selection signals.

Accordingly, a need exists in the art for a way of increasing the number of processor - I/O registers that can be addressed at any one time, without changing the existing processor buses.

It is thus an object of the invention to increase the number of processor - I/O registers that can be addressed by the processor, and to increase the number of addressable processor - I/O registers without changing existing processor buses.

The above objects of the invention are realized by a data processing apparatus, comprising, a processor producing a plurality of register addressing signals and a plurality of access mode control signals, a plurality of registers, at least some of said registers having a width of X bytes, and at least one other of said registers having a width of Y bytes, wherein X and Y are integers greater than zero and X > Y, a bus having a width of X bytes, said bus being coupled between said plurality of registers and said processor, and means coupled to said bus for decoding said plurality of register addressing signals and said plurality of access mode control signals, said means addressing one of said registers having a width of X bytes when such register is selected by said plurality of register addressing signals and when said plurality of access mode control signals indicate an X byte access mode, said means addressing said at least one other register having a width of Y bytes when said plurality of access mode control signals indicate a Y byte access mode.

In this manner, a greater amount of register space is now available for a given set of address signals, such that more processor - I/O registers can be accessed without changing the processor bus.

The above and other structures and teachings of the invention will become more apparent upon review of a description of the best mode for carrying out the invention as rendered below. In the description to follow, reference will be made to the accompanying Drawing, wherein:

Fig. 1 is a circuit block diagram of a two byte implementation of the invention; and

Fig. 2 is a truth table for access mode control signals SBHE and A0 of Fig. 1.

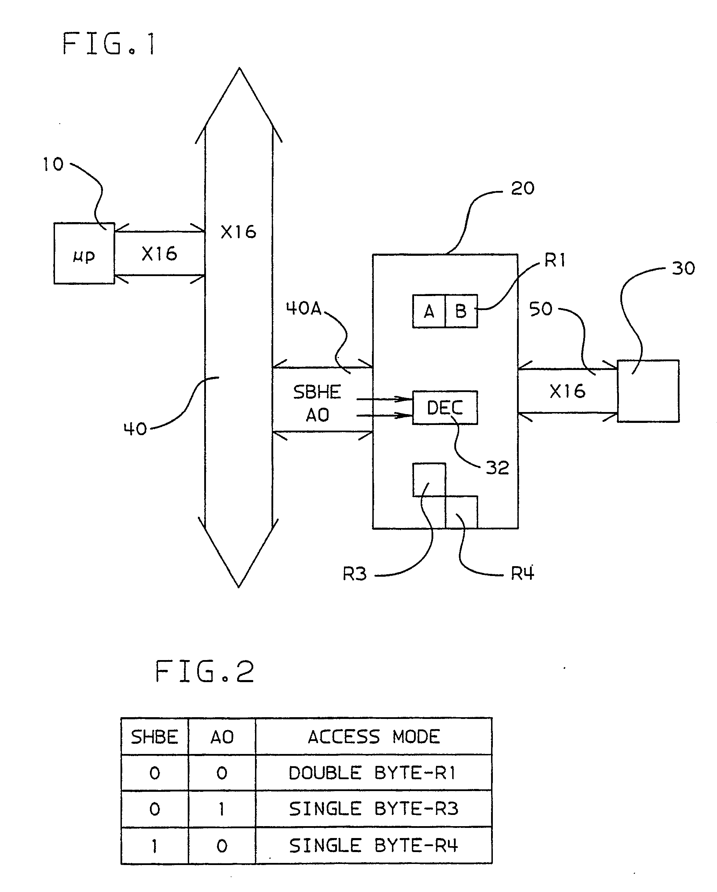

With reference to Fig. 1, a data processing system is shown that has a processor 10, an interface device 20, and a peripheral device 30. The respective circuit blocks are interconnected by a bus. The bus consists of a portion 40 that is directly coupled to processor 10 and is coupled in common to all of the elements that form the internal communications network; a portion 40A tapped off bus 40 for interconnection to the interface device 20; and a portion 50 that is separate from bus 40, and is only coupled between the peripheral device 30 and the interface element 20.

The invention is directed to microprocessor-based data processing products such as personal computers and workstations. Thus, for example, processor 10 is preferrably a microprocessor such as the 80286 or 80386 sold by the Intel Corp. of Santa Clara, CA, and the bus 40, 40A is preferrably the Micro Channel which is incorporated in the Personal System/2 or PS/2 systems sold by IBM (Personal System/2, PS/2, and Micro Channel are trademarks of the IBM Corporation). The processor 10 is mounted on a master board or motherboard. The peripheral device can be a keyboard, etc. In this example, the peripheral device 30 is an adaptor card coupled to the motherboard of the data processor, and the interface device 20 is an integrated circuit chip mounted on the adaptor card.

The general operation of this system is as follows. The processor 10 produces a set of instruction/data signals, 16 bits at a time, that is transmitted by the bus 40 (which in the case of Micro Channel maybe 16 bits wide). The processor 10 also produces a set of register selection signals that select a particular processor - I/O register to be addressed. Finally, The processor 10 produces the SBHE and A0 signals that determine the access mode. These signals are all received and processed by the interface device 20. As a function of these signals, device 20 addresses a particular one of its processor - I/O registers. Thus, the data/instructions to be transferred between the peripheral device 30 and the processor 10 are temporarily stored in the addressed register. In the next machine cycle, the element that is to receive the information accesses the addressed register.

Considering the interface device 20 in more detail, it includes a double byte processor - I/O register R1, single byte status registers R3 and R4, and a decoder DEC 32. DEC 32 receives signals SBHE and A0 from the processor bus 40, 40A. As shown in Fig. 2, when both of these signals are low, the two-byte wide processor - I/O register R1 is addressed in the conventional manner. Register address signals from processor 10 determine that register R1 is to be addressed during the double-byte access. These signals are decoded by another decoding means (not shown). If SBHE is low when A0 is high, DEC 32 determines that a single byte access has been selected and addresses single byte register R3. If SBHE is high when A0 is low, the second single-byte register R4 is addressed. R3 and R4 are separate registers associated with the interface device 20 that are not accessed during the usual double-byte transfers. In one particular example, register R3 is a status register that normally stores miscellaneous flag bits, etc.

Thus, when the SBHE and A0 signals are of different logic states, DEC 32 directs the addressing to separate single-byte registers. This operation doubles the register addressing capability of the system, because for the same set of register addressing signals from processor 10 which normally select R1, a different register R3 or R4 has been addressed. Note that this increase in addressing capability did not come at the expense of increasing the size of the bus, because the same SBHE, A0 signals that were used to simply select between access modes are now also used to choose between the different single-byte registers.

Although the particular example shown in Fig. 1 is a single double-byte register, this invention doubles the address space associated with any number of double-byte registers. For example, if there were ten double-byte registers, the invention could be used to address twenty separate single-byte registers. Moreover, the general idea behind the invention can also be applied to four-byte accesses. In other words, the same access mode control signals that select between one, two, and four-byte processor - I/O register accesses can be used to address selected one and two-byte registers, thus tripling the effective address space. For example, if there were ten four-byte registers, the invention could be used to address twenty separate double-byte registers, and forty separate single-byte registers.

Moreover, while the invention has been shown as utilizing a separate interface device 20, in practice the same function could be provided by a device that is a part of the peripheral device 30, or by a coprocessor associated with processor 10. The use of a separate interface device 20 is preferred because of its ability to handle the above-discussed and other interface functions between the bus 40 and the peripheral device 30. In this manner, the peripheral device can be designed without being constrained by the interface functions. This is a feature of great value to peripheral device designers, who would greatly prefer to have their devices be compatible with a broader range of bussing arrangements.

## Claims

1. A data processing apparatus, comprising:
a processor producing a plurality of access mode control signals;
a plurality of registers, at least some of said registers having a width of X bytes, and at least one other of said registers having a width of Y bytes, wherein X and Y are integers greater than zero and $X > Y$;
a bus having a width of X bytes, said bus being coupled between said plurality of registers and said processor; and
means coupled to said bus for decoding said plurality of access mode control signals, said means addressing a selected one of said plurality of registers having a width of X bytes when said plurality of access mode control signals indicate an X byte access mode, said means addressing said at least one other register having a width of Y bytes when said plurality of access mode control signals indicate a Y byte access mode.

2. A data processing apparatus as recited in Claim 1, wherein said processor is a microprocessor.

3. A data processing apparatus as recited in Claim 1, wherein X = 2 and Y = 1.

4. A data processing apparatus as recited in Claim 1, wherein X = 4 and Y is 2 or less.

5. A data processing apparatus as recited in Claim 2, further comprising a peripheral device coupled to said plurality of registers.

6. A data processing apparatus as recited in Claim 5, wherein said peripheral device is an adaptor card.

7. A data processing apparatus as recited in Claim 6, wherein said microprocessor comprises a first integrated circuit chip, and said plurality of registers and said means are disposed on a second integrated circuit chip.

8. A data processing apparatus as recited in one or more of the preceding claims 1 - 7, comprising:
a processor generating a plurality of access mode control signals;
a bus for transmitting signals to and from said processor;
a first plurality of registers coupled to said bus, having a width of X bytes;
a second plurality of registers coupled to said bus, having a width of Y bytes, X and Y being integers greater than zero and $X > Y$;
a decoder coupled to said bus for addressing a selected one of said plurality of registers in accordance with said plurality of access mode signals.

9. A data processing apparatus as recited in Claim 8, wherein X = 2.

10. A data processing apparatus as recited in Claim 8, further comprising an adaptor card coupled to said first plurality of registers and said second plurality of registers.

11. A data processing apparatus as recited in Claim 10, wherein said first plurality of registers, said second plurality of registers, and said decoder are all disposed on a single integrated circuit chip.

12. A data processing apparatus as recited in Claim 11, wherein said single integrated circuit chip is disposed on said adaptor card.

13. A data processing apparatus as recited in one or more of the preceding claims 1 - 12 having a microprocessor producing access mode control signals, a bus having a given byte width coupled to the microprocessor, and at least one peripheral device, characterized by an interface device coupled between the bus and the peripheral device, comprising:
a first plurality of registers having a byte width equivalent tc that of the bus;
a second plurality of registers having a byte width of at least one byte, said byte width of said second plurality of registers being less than the given bus width; and
a decoder responding to the access mode control signals from said microprocessor for addressing a selected one of said first plurality of registers when the access mode control signals indicate that registers of the given byte width are to be accessed,
said decoder addressing a selected one of said second plurality of registers when the access mode control signals indicate that registers having a byte width less than the given bus width are to be accessed.

14. A data processing apparatus of Claim 13, wherein the microprocessor is disposed on a single integrated circuit chip that is mounted on a master board.

15. A data processing apparatus of Claim 14, wherein the interface device is disposed on a single integrated circuit chip that is mounted on the master board.

16. A data processing apparatus of Claim 15, wherein the interface device is disposed on a single integrated circuit chip that is mounted on an adaptor card that is mounted on the master board, signals to and from the peripheral device being processed by said adaptor card.

17. A data processing apparatus as recited in one or more of the claims 1 - 16 for use in a computer apparatus comprising a central processing unit, the central processing unit producing signals indicating the amount of data to be transmitted/received in a given machine operation, a bus coupled to the central processing unit, an output device, a first set of registers coupled to the bus and the output device, each having a given storage capacity, and a second set of registers coupled to the bus and the output device, each having a given storage capacity that is less than that of one of the first set of registers, a register controller comprising means for addressing a selected one of a second set of registers when the signals from the central processing unit indicate that the amount of data to be transmitted/received in the given machine cycle is less than the storage capacity of one of the first set of registers.

18. An access method in a computer apparatus of claim 17 having a central processing unit, a bus coupled to said central processing unit, a first set of registers having a byte width of X, a second set of registers having a byte width of Y, X and Y being integers and X > Y, and a peripheral device coupled to both of the first set of registers and the second set of registers, comprising the steps of:

accessing the first set of registers when a first set of control signals from the central processing unit indicate that data having a byte width of X is to be transferred,

addressing a selected one of said first set of registers as a function of the particular logic states of a second set of control signals from the central processing unit,

accessing the second set of registers when said first set of control signals indicate that data having a byte width of Y is to be transferred,

addressing a selected one of said second set of registers as a function of the particular logic states of said first set of control signals.

## FIG.1

## FIG.2

| SHBE | AO | ACCESS MODE |
|:---:|:---:|:---:|
| 0 | 0 | DOUBLE BYTE-R1 |
| 0 | 1 | SINGLE BYTE-R3 |
| 1 | 0 | SINGLE BYTE-R4 |